# EUROPEAN PATENT SPECIFICATION

(11) **EP 1 894 658 B1**
(45) Date of publication and mention of the grant of the patent: **24.11.2010**
(21) Application number: 07252986.0
(22) Date of filing: 30.07.2007
(51) Int. Cl.: B23K 1/00, B23K 1/005

(54) **Brazing repairs**
Reparaturen mittels Hartlötung
Réparations au brasage

(30) Priority: 01.08.2006 US 497100
(43) Date of publication of application: 05.03.2008
(73) Proprietor: United Technologies Corporation, Hartford, CT 06101 (US)
(72) Inventor: Malley, David R., Bolton, CT 06043 (US); Rutz, David A., Glastonbury, CT 06033 (US); Moor, James J., Torrington, CT 06790 (US)
(74) Representative: Leckey, David Herbert

(56) References cited:
- EP-A- 1 424 158
- EP-A- 1 790 745
- US-A- 5 395 584
- US-B1- 6 223 976

## Description

### BACKGROUND OF THE INVENTION

The invention relates to gas turbine engine manufacture. More particularly, the invention relates to braze manufacture of gas turbine engine components.

In the manufacture of gas turbine engines, it is known to use bulk brazing or soldering (collectively brazing except where indicated to the contrary) techniques to join components. An exemplary bulk technique is a vacuum furnace braze wherein the components are assembled with pre-placed braze material in the areas to be joined and heated so that the braze joint is formed. Other brazing techniques that are used for more smaller scale applications are oxy-acetylene torch and induction brazing.

Bulk brazing is subject to joint defects. Exemplary defects include voids (including through-voids) and cracks. Such defects can lead to significant re-work and/or scrappage. Touch-up repair of the defects may be attempted. This may typically involve use of gas tungsten arc torch (which may overheat the braze and/or parent material) or a lower temperature braze alloy than that of the bulk brazing, thereby compromising structural properties.

EP-A-179075, which is prior art under Art. 54(3) EPC, discloses a repair method in which a solder is applied to a repair site, the repair site and solder being heated to melt the solder, whereafter the solder is left to solidify.

### SUMMARY OF THE INVENTION

One aspect of the invention involves a method wherein a first component is bulk brazed to a second component. The bulk braze joint is inspected. Responsive to the inspection locating a defect site, the joint is laser brazed at the defect site.

The details of one or more embodiments of the invention are set forth in the accompanying drawings and the description below. Other features and advantages of the invention will be apparent from the description and drawings, and from the claims.

### BRIEF DESCRIPTION OF THE DRAWINGS

FIG. 1 is a partially schematic view of a touch-up repair being performed on a brazed gas turbine engine stator vane.
FIG. 2 is a partially schematic view of a touch-up repair being performed on a brazed honeycomb panel.
FIG. 3 is a partially schematic view of a touch-up repair being performed on a brazed tube assembly.

Like reference numbers and designations in the various drawings indicate like elements.

### DETAILED DESCRIPTION

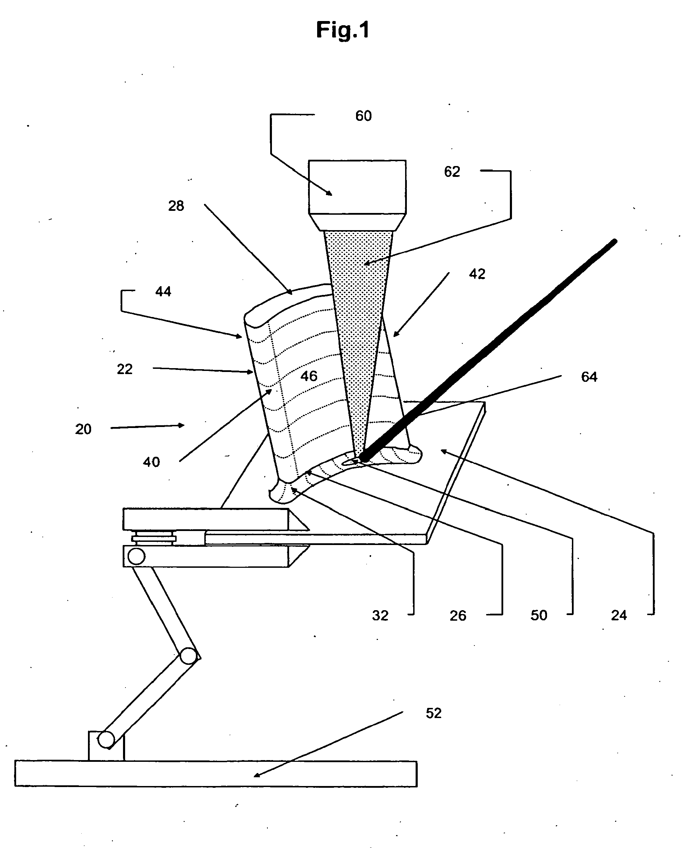

FIG. 1 shows a vane 20 undergoing a braze touch-up. The vane 20 has an airfoil 22 and an OD shroud 24. The airfoil 22 has an outboard end 26 and an inboard end 28. Adjacent the outboard end 26, the airfoil 22 is secured to the shroud 24 by a bulk fillet braze 32. The airfoil 22 has a leading edge 40, a trailing edge 42, a suction side surface 44, and a pressure side surface 46. The vane is slid through a hole of similar geometry in the shroud and the exemplary braze 32 circumscribes the airfoil essentially along an entirety of the pressure and suction sides on the ID and OD faces of the shroud. The exemplary braze 32, however, may be initially formed with a defect 50 (e.g., a through-void). The presence of the defect 50 may be detected in an inspection (e.g., an automated inspection such as an X-ray inspection) or a manual visual inspection. The location of the defect(s) may be noted and/or recorded. The vane 20 may be placed in a repair fixture 52 (e.g., a three-axis positioning fixture) of a braze repair station. The station further includes a laser head 60 directing a beam 62 to the site of the defect 50. Optionally, braze filler in the form of a wire or rod 64 may be used to add additional material.

In an exemplary manual implementation, the head is fixed and the fixture may be manually articulated and locked so as to place the defect in an operative position along the beam axis and an operative orientation wherein the braze surface is sufficiently close to normal to that axis.

In an exemplary automated implementation, the fixture 52 may articulate responsive to stored data on defect position to appropriately sweep the beam 62 across each individual defect and then reposition the beam to repair the next defect (if any) on the vane. This articulation may be combined with or replaced by articulation of the head 60. In various implementations, the inspection and touch-up brazing may be performed at a single station (e.g., with the assembly held in a single fixture).

Advantageously, the laser braze and bulk braze use like braze alloys. For example, the alloys may be identical or at least consist essentially of identical compositions (at a minimum, minor variations would be expected based upon different application techniques, vendors, and the like so that the term "identical compositions" as used herein is intended to encompass compositions having only minor variations). More broadly, the alloys could be similarly-based (e.g., a gold- or nickel-based alloy for both rather than a nickel-based alloy for the bulk braze and a gold-based alloy for the laser braze).

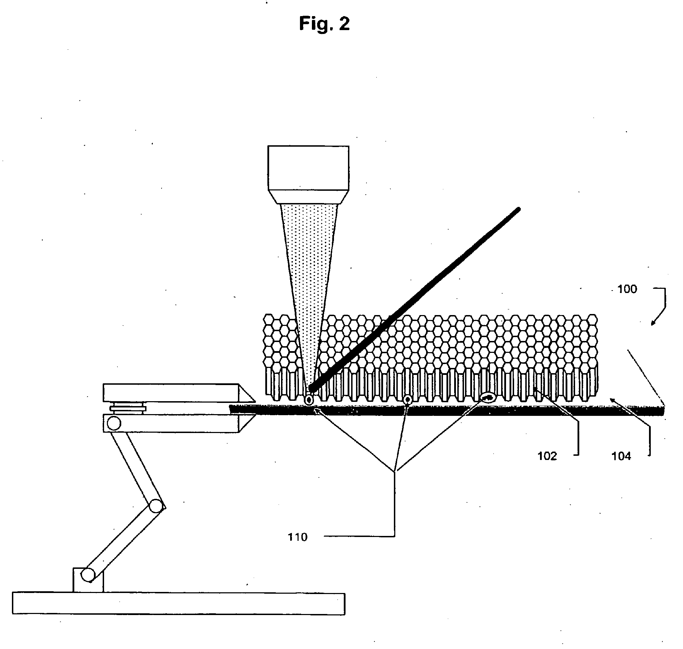

FIG. 2 shows a panel 100 including a honeycomb layer 102 and a face sheet 104. For purposes of illustration, a second face sheet (if any) is not shown. In a bulk brazing process, the honeycomb material 102 is initially brazed to the face sheet(s). An inspection may reveal defects 110 (e.g., voids in the braze joint). A touch-up laser braze may be performed as described above.

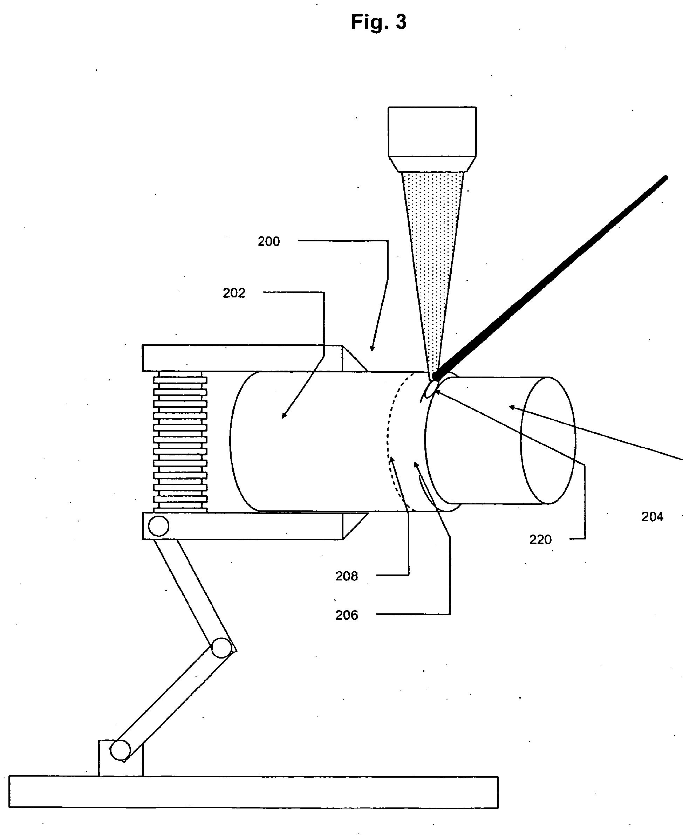

FIG. 3 shows a tube assembly 200 including a first tube 202 and a second tube 204. The first tube 202 has an end 206. The second tube 204 has an end 208. A portion of the second tube 204 adjacent the end 208 is concentrically received within an adjacent portion of the first tube 202 near the end 206. A bulk braze is performed which may leave one or more defects 220 (e.g., voids). Inspection and touch-up laser braze may be performed as described above.

An exemplary gold-based braze alloy is SAE/AMS4787, 82Au-18Ni by weight, with a 1740°F (949°C) solidus-liquidus temperature. An exemplary silver-based braze alloy is SAE/AMS4765, 56Ag-42Cu-2Ni by weight, with a 1420°F-1640°F (771°C-893°C) solidus-liquidus temperature range. An exemplary nickel-based braze alloy is SAE/AMS4777, 3.1B-7Cr-3Fe-82Ni-4.5Si by weight, with a 1780°F-1830°F (971°C-999°C) solidus-liquidus temperature range. An exemplary cobalt-based braze alloy is SAE/AMS4783, 0.8B-50Co-19Cr-17Ni-8Si-4W by weight, with a 2050°F-2100°F (1121°C-1149°C) solidus-liquidus temperature range.

One particular group of variations may be particularly relevant to higher temperature braze alloys such as the NiB SAE/AMS4777. In this variation, the laser braze may address certain defects (e.g., larger voids). However, the laser braze may itself have cracks or stress concentrations that may cause future cracks. In these variations, after the laser braze, the assembly is subject to further heating (e.g., bulk heating as in the vacuum furnace). The further heating (reheating) may be to a temperature lower than the temperature associated with the original bulk braze but still high enough to seal the cracks and/or relax the stresses. For example, an exemplary bulk braze may be to a specified temperature 25-200°F (14-112°C) above the liquidus of the braze alloy. The reheat may be above the liquidus by a much smaller amount (e.g., 10-50%) of that amount, such as 15-40°F (8-22°C).

## Claims

1. A method comprising:
bulk brazing a first component (20;102;202) to a second component (24;104;204);
inspecting the bulk braze joint (32); and
responsive to the inspection locating a defect site (50;110;220), laser brazing at the defect site.

2. The method of claim 1 wherein:
after the laser brazing there is no further heating to a temperature above a liquidus of a braze alloy of the bulk braze joint.

3. The method of claim 1 further comprising:
a bulk reheat after the laser brazing to a temperature less than a temperature of the bulk brazing.

4. The method of claim 3 wherein:
the bulk brazing is a furnace brazing; and
the bulk reheat is in the same furnace as the furnace brazing.

5. The method of any preceding claim wherein:
the bulk brazing and the laser brazing use braze alloys having the same base metal.

6. The method of any preceding claim wherein:
the bulk brazing and the laser brazing use alloys consisting of like composition.

7. The method of any preceding claim wherein:
the bulk brazing is a furnace brazing.

8. The method of any of claims 1 to 6 wherein:
the bulk brazing is an induction brazing.

9. The method of any preceding claim wherein:
the bulk brazing is a fillet brazing.

10. The method of any preceding claim wherein:
the bulk brazing is an Au or Ag or Ni brazing.

11. The method of any preceding claim wherein:
the first component is a vane airfoil (20);
the second component a shroud (24); and
the bulk brazing is along a perimeter of the airfoil (20).

12. The method of any of claims 1 to 10 wherein:
the first component is a honeycomb (102);
the second component a face sheet (104); and
the bulk brazing is along a perimeter of the honeycomb (102).

13. The method of any of claims 1 to 10 wherein:
the first component is a first tube (202);
the second component is a second tube (204) having an end portion (208) within an end portion (206) of the first tube (202); and
one of the first and second tubes (202,204) comprises stainless steel, and the other comprises a Ni-based superalloy.

14. The method of any preceding claim wherein:
the first component (20;102;202) comprises a first Ni-based superalloy; and
the second component (24;104;204) comprises a second Ni-based superalloy, different from the first Ni-based superalloy.

## Patentansprüche

1. Verfahren, das folgende Schritte aufweist:
Chargen-Hartlöten einer ersten Komponente (20; 102; 202) an eine zweite Komponente (24, 104; 204);
Inspizieren der Chargen-Hartlötverbindung (32); und
bei Lokalisierung einer Defektstelle (50; 110; 220) ansprechend auf die Inspektion Ausführen eines Laser-Hartlötvorgangs an der Defektstelle.

2. Verfahren nach Anspruch 1,
wobei nach dem Laser-Hartlöten keine weitere Erwärmung auf eine Temperatur über einer Liquidus-Temperatur einer Hartlötlegierung der Chargen-Hartlötverbindung stattfindet.

3. Verfahren nach Anspruch 1,
bei dem weiterhin nach dem Laser-Hartlöten eine Chargen-Wiedererwärmung auf eine Temperatur stattfindet, die niedriger ist als eine Temperatur des Chargen-Hartlötvorgangs.

4. Verfahren nach Anspruch 3,
wobei es sich bei dem Chargen-Hartlötvorgang um einen Ofen-Hartlötvorgang handelt; und
wobei die Chargen-Wiedererwärmung in dem gleichen Ofen stattfindet wie der Ofen-Hartlötvorgang.

5. Verfahren nach einem der vorausgehenden Ansprüche,
wobei bei dem Chargen-Hartlötvorgang und dem Laser-Hartlötvorgang Hartlötlegierungen mit dem gleichen Basismetall verwendet werden.

6. Verfahren nach einem der vorausgehenden Ansprüche,
wobei bei dem Chargen-Hartlötvorgang und dem Laser-Hartlötvorgang Legierungen verwendet werden, die die gleiche Zusammensetzung aufweisen.

7. Verfahren nach einem der vorausgehenden Ansprüche,
wobei der Chargen-Hartlötvorgang ein Ofen-Hartlötvorgang ist.

8. Verfahren nach einem der vorausgehenden Ansprüche,
wobei der Chargen-Hartlötvorgang ein Induktions-Hartlötvorgang ist.

9. Verfahren nach einem der vorausgehenden Ansprüche,
wobei der Chargen-Hartlötvorgang ein Kehlnaht-Hartlötvorgang ist.

10. Verfahren nach einem der vorausgehenden Ansprüche,
wobei es sich bei dem Chargen-Hartlötvorgang um einen Au- oder Ag- oder Ni-Hartlötvorgang handelt.

11. Verfahren nach einem der vorausgehenden Ansprüche,
wobei die erste Komponente ein Schaufel-Strömungsprofil (20) ist;
wobei die zweite Komponente ein Mantel (24) ist; und
wobei der Chargen-Hartlötvorgang entlang eines Umfangs des Strömungsprofils (20) stattfindet.

12. Verfahren nach einem der Ansprüche 1 bis 10,
wobei die erste Komponente eine Wabenstruktur (102) ist;
wobei die zweite Komponente ein Frontflächenkörer (104) ist; und
wobei der Chargen-Hartlötvorgang entlang eines Umfangs der Wabenstruktur (102) stattfindet.

13. Verfahren nach einem der Ansprüche 1 bis 10,
wobei die erste Komponente ein erstes Rohr (202) ist;
wobei die zweite Komponente ein zweites Rohr (204) ist, das einen Endbereich (208) innerhalb eines Endbereichs (206) des ersten Rohrs (202) aufweist; und wobei eines von dem ersten und dem zweiten Rohr (202, 204) rostfreien Stahl und das andere eine Superlegierung auf Ni-Basis aufweist.

14. Verfahren nach einem der vorausgehenden Ansprüche,
wobei die erste Komponente (20; 102; 202) eine erste Superlegierung auf Ni-Basis aufweist; und
wobei die zweite Komponente (24; 104; 204) eine zweite Superlegierung auf Ni-Basis aufweist, die von der ersten Superlegierung auf Ni-Basis verschieden ist.

## Revendications

1. Procédé, comprenant:
le brasage brut d'un premier composant (20; 102; 202) sur un deuxième composant (24; 104; 204);
l'inspection du joint brasé brut (32); et
en réponse à l'inspection qui a localisé un site de défaut (50; 110; 220), l'exécution d'un brasage au laser à l'endroit du site de défaut.

2. Procédé selon la revendication 1, dans lequel:
après le brasage au laser, il n'y a plus de chauffage à une température supérieure à une température de liquidus d'un alliage de brasage du joint brasé brut.

3. Procédé selon la revendication 1, comprenant en outre:
un réchauffage massif après le brasage au laser à une température inférieure à une température du brasage brut.

4. Procédé selon la revendication 3, dans lequel:
le brasage brut est un brasage au four; et
le réchauffage massif est exécuté dans le même four que le brasage au four.

5. Procédé selon l'une quelconque des revendications précédentes, dans lequel:
le brasage brut et le brasage au laser utilisent des alliages de brasage qui comprennent le même métal de base.

6. Procédé selon l'une quelconque des revendications précédentes, dans lequel:
le brasage brut et le brasage au laser utilisent des alliages qui présentent la même composition.

7. Procédé selon l'une quelconque des revendications précédentes, dans lequel:
le brasage brut est un brasage au four.

8. Procédé selon l'une quelconque des revendications 1 à 6, dans lequel:
le brasage brut est un brasage par induction.

9. Procédé selon l'une quelconque des revendications précédentes, dans lequel:
le brasage brut est un brasage d'angle.

10. Procédé selon l'une quelconque des revendications précédentes, dans lequel:
le brasage brut est un brasage à l'or (Au), à l'argent (Ag) ou au nickel (Ni).

11. Procédé selon l'une quelconque des revendications précédentes, dans lequel:
le premier composant est une surface portante d'une ailette (20)
le deuxième composant est un plateau (24); et
le brasage brut est effectué le long d'un périmètre de la surface portante (20).

12. Procédé selon l'une quelconque des revendications 1 à 10, dans lequel:
le premier composant est une structure en nid d'abeilles (102);
le deuxième composant est une semelle (104); et
le brasage brut est effectué le long d'un périmètre de la structure en nid d'abeilles (102).

13. Procédé selon l'une quelconque des revendications 1 à 10, dans lequel:
le premier composant est un premier tube (202);
le deuxième composant est un deuxième tube (204) qui présente une partie d'extrémité (208) qui est située à l'intérieur d'une partie d'extrémité (206) du premier tube (202); et
un des premier et deuxième tubes (202, 204) contient de l'acier inoxydable, et l'autre contient un superalliage à base de nickel.

14. Procédé selon l'une quelconque des revendications précédentes, dans lequel:
le premier composant (20; 102; 202) contient un premier super alliage à base de nickel; et
le deuxième composant (24; 104; 204) contient un deuxième superalliage à base de nickel, qui est différent du premier super alliage à base de nickel.
